(19) Europäisches Patentamt
European Patent Office
Office européen des brevets

(11) **EP 2 120 363 A1**

(12) **EUROPEAN PATENT APPLICATION**

(43) Date of publication:
**18.11.2009 Bulletin 2009/47**

(51) Int Cl.:
**H04B 7/04** (2006.01)

(21) Application number: **08290452.5**

(22) Date of filing: **14.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Sequans Communications**
**92073 Paris La Défense Cedex (FR)**

(72) Inventor: **Sari, Hikmet**
**94220 Charenton (FR)**

(74) Representative: **Gendron, Vincent Christian et al**
**Novagraaf Technologies**
**122, rue Edouard Vaillant**
**92593 Levallois-Perret Cedex (FR)**

(54) **Full frequency reuse method in a wireless communication network with sectored cells**

(57) A full frequency reuse communication method for a base station in a cell of a wireless communication system, the cell comprising at least a plurality of sectors, the base station comprising at least one antenna per sector to be covered, the antennas using the same frequency band. When at least a user is located in an interference region of two adjacent sectors, at least the antennas covering the two adjacent sectors cooperate with each other to carry out a MIMO (Multi-Input-Multi-Output) technique for communication with at least the user.

Fig. 3

**Description**

The present invention pertains to wireless communication systems, and more particularly, to a communication method allowing full frequency reuse in a sectored cell, for communication in uplink and downlink.

More precisely, according to an aspect, the invention relates to a full frequency reuse communication method for a base station in a cell of a wireless communication system, the cell comprising at least a first and a second sectors, the first and the second sectors being adjacent, the base station comprising at least a first and a second antenna, the first antenna covering the first sector and at least a part of the second sector, the second antenna covering the second sector and at least a part of the first sector, the cell further comprising at least an interference region comprising the part of the second sector covered by the first antenna and the part of the first sector covered by the second antenna, and a frequency band being simultaneously used by both the first and the second antennas for communication.

According to another aspect, the invention relates to a base station in a cell of a wireless communication system, the cell being divided into a plurality of sectors, the base station comprising at least one antenna per sector of the cell, and a frequency band is simultaneously used by the antennas of the base station.

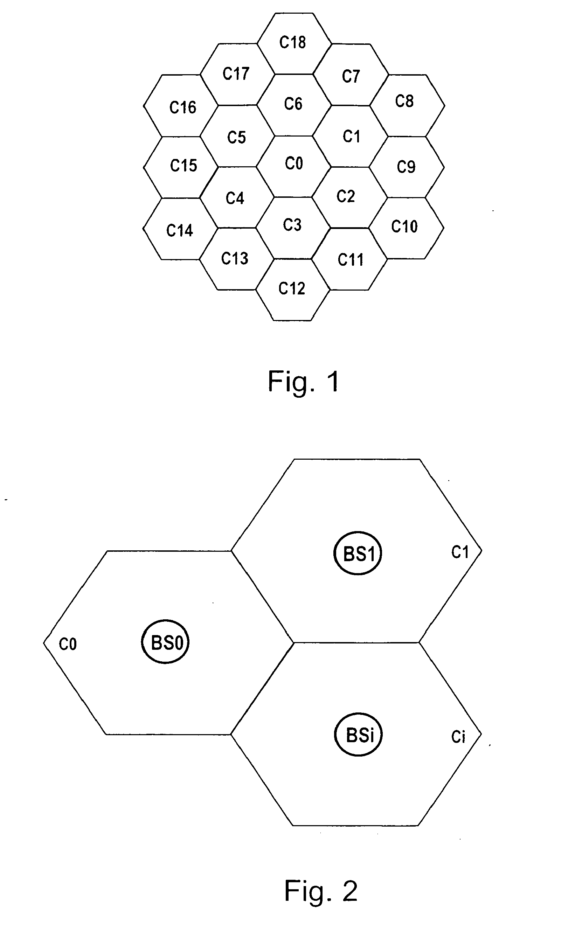

In a wireless communication system, a service area may be divided into a plurality of coverage zones generally referred to as cells. For example, figure 1 shows nineteen cells (C0 to C18), each cell being represented in a hexagonal form, but of course they may have another form.

Each cell comprises a base station BS, as shown in figure 2, base station BS0 being in cell C0, base station BS1 being in cell C1, and bas station BSi being in cell Ci (i being an integer indicating the number of the cell). Each cell may also comprise one or a plurality of users, a user being for example a mobile station.

Cell sectoring scheme (or sectorization) is commonly used to increase cell capacity, and consists in dividing a cell into a plurality of sectors. A cell sectoring scheme is for example a cell sectoring scheme using 120°, 90°, or 60° sectors.

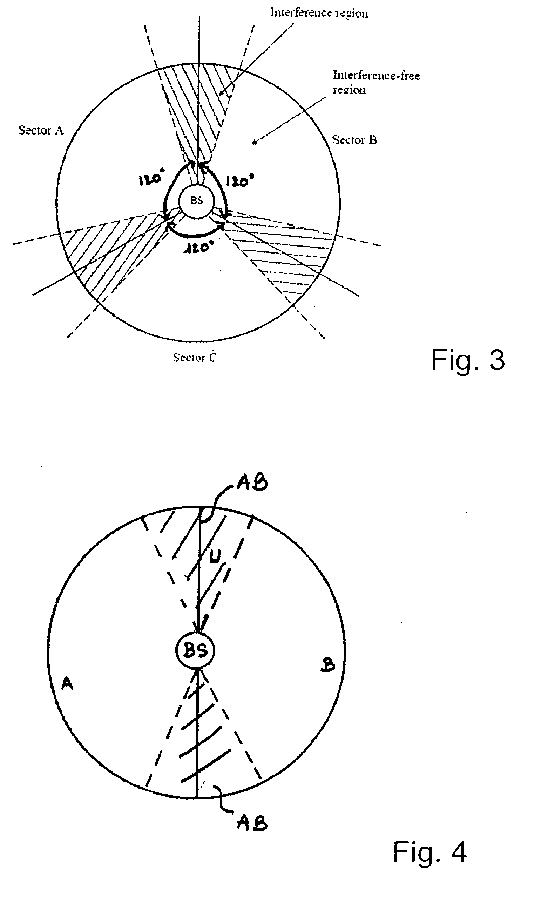

Figure 3 illustrates a cell sectoring scheme using 120° sectors, and where the cell is represented in a circular form and wherein a base station BS is paced in the centre of the cell. In this case, the cell is divided into three distinct sectors: a first sector A, a second sector B and a third C. The first, second and third sectors have an angle at the centre equal to 120°, the continuous lines represented in figure 3 being the borderlines between adjacent sectors.

The base station BS comprises at least one antenna per sector of the cell (for example a directional antenna). In the case of figure 3, the base station may comprise for example a first antenna covering the first sector A, a second antenna covering the second sector B and a third antenna covering the third sector C. Users located in the first sector are served by the first antenna, users located in the second sector are served by the second antenna, and users located in the third sector are served by the third antenna.

Mostly, in order to make sure that all the area of the cell is covered by at least one antenna of the base station, radiation diagrams of antennas covering adjacent sectors overlap, that is to say, an antenna of a sector covers more than 120°.

For example, the first antenna covers the first sector A and parts of the second and third sectors, the second antenna covers the second sector B and parts of the first and third sectors, and the third antenna covers the third sector C and parts of the first and second sectors.

The overlaps of radiation diagrams of antennas of adjacent sectors generate interference between signals transmitted by users located in overlap regions, in particular when the adjacent antennas use the same frequency band (or group of carrier). For example in figure 3, the blank region in each sector is a non-overlap region which is free of interference, and the hatched regions, delimited by dot-dash lines, are the interference regions (or overlap regions) between adjacent sectors.

First, second and third antennas can serve users located in the non-overlap regions of respectively first, second and third sectors, by using the same frequency band (or group of subcarriers). More specifically, suppose that the first antenna is serving a first user U1 in the non-overlap region of the first sector A using a particular subcarriers group, the same particular subcarriers group can be used by the second and third antennas to serve users in the non-overlap region of respectively the second and third sectors B, C.

In order to avoid interference in overlap regions (or interference regions), static or dynamic frequency allocation can be carried out.

For a cell sectoring scheme using 120° sectors, the easiest frequency management may consist in allocating a separate channel to each sector, that is to say different carrier groups are allocated to different interference regions. For example, allocating first, second and third frequency bands to respectively the first, second and third sectors, the first, second and third frequency bands being different and distinct from each other. In this case, as the cell is divided in three sectors, the cell capacity is tripled with respect to a non-sectored cell, but the bandwidth occupancy is also tripled.

Another frequency management may consist in a partial reuse of the frequencies. In this case, a same frequency band is allocated to interference-free or low-interference regions of the cell, and separate frequency bands are allocated to high-interference regions of the sectors.

Ideally, the same frequency band should be used in all sectors. This scheme is commonly called full frequency reuse (or frequency reuse factor 1).

One solution may consist in performing a complex dynamic frequency allocation in overlap regions to avoid using in other overlap regions a frequency band or a group of carriers used in one of these overlap regions.

This solution, which is a particular case of the partial frequency reuse, reduces the frequency reuse factor and involves complex frequency management.

One aim of the invention is to propose a method which is exempt from at least one of the drawbacks previously mentioned. The invention proposes notably a simple solution to allow full frequency reuse (or frequency reuse factor 1) in sectored cells. The same frequency band can be used in all sectors and this allows increasing of the cell capacity without requiring more bandwidth and suppresses the need for performing frequency management or complex frequency planning.

For this purpose, an object of the invention is to provide a full frequency reuse communication method for a base station in a cell of a wireless communication system, the cell comprising at least a plurality of sectors, the base station comprising at least one antenna per sector to be covered, the antennas using the same frequency band. When at least a user is located in an interference region of two adjacent sectors, at least the antennas covering the two adjacent sectors cooperate with each other to carry out a MIMO (multi-input multi-output) technique for communication with at least the user.

Therefore, at least two adjacent antennas collaborate with each other to carry out a MIMO technique for transmission and reception of information to and from at least a user located in the interference region of two adjacent sectors.

In one embodiment, the cell comprising at least a first and a second sectors, the first and the second sectors being adjacent, the base station comprising at least first and second antennas, each antenna being connected to a corresponding transmitter and receiver of the base station, the first antenna covering the first sector and at least a part of the second sector, the second antenna covering the second sector and at least a part of the first sector, the cell further comprising at least an interference region comprising the part of the second sector covered by the first antenna and the part of the first sector covered by the second antenna, a frequency band being simultaneously used by both the first and the second antennas for communication. Preferably, the full frequency reuse communication method comprises at least the steps:

A- estimating at least the position of at least a user (U) in the cell; and

B- if at least the user is located in the interference region covered simultaneously by the first and second antennas, simultaneously using at least the first and second antennas and the corresponding transmitters and receivers to carry out a Multi-Input-Multi-Output technique for communication with at least the user.

In step B, a joint detection technique may be performed by the corresponding receivers of the first and second antennas for detecting symbols received from the user, and a joint space-time-coding may be performed by the corresponding transmitters of the first and second antennas to transmit symbols to the user.

The joint detection is for example maximum likelihood detection.

In another embodiment, preferably, the cell may comprise at least the first sector, the second sector and a third sector, the first sector being adjacent to the second and the third sectors, the base station may comprise the first, the second and a third antennas, the first antenna covering the first sector and a part of the second and third sectors, the second antenna covering the second sector and a part of the first and third sectors, the third antenna covering the third sector and a part of the first and second sectors. Advantageously, the cell may further comprise at least a first, a second and a third interference regions, the first interference region comprising the part of the second sector covered by the first antenna and the part of the first sector covered by the second antenna, the second interference region comprising the part of the third sector covered by the second antenna and the part of the second sector covered by the third antenna, the third interference region comprising the part of the third sector covered by the first antenna and the part of the first sector covered by the third antenna, the first, second and third antennas simultaneously using the same frequency band for communication. Preferably, in step A, the position of at least a first and a second users is estimated, and for example in step B, if at least the first and second users are located in the first interference region covered simultaneously by the first and second antennas, simultaneously using at least the first and second antennas and the corresponding transmitters and receivers to carry out a Multi-Input-Multi-Output technique for communication with at least the first and second users.

In another embodiment, a third user may be located in the third sector outside of the second and third interference regions, and in step B, the third antenna and the corresponding transmitter and receiver of the third antenna may be used for communication with the third user in the same frequency band.

Advantageously, the base station may comprise at least the first, the second, the third, a fourth, a fifth and a sixth antennas, the first and the fourth antennas covering at least the first sector, the second and the fifth antenna covering at least the second sector, the third and sixth antennas covering at least the third sector, and preferably, in step B, at least the first, the fourth, the second and the fifth antennas and the corresponding transmitters and receivers are used simultaneously to carry out Multi-Input-Multi-Output technique for communication with at least the first and second users.

In another embodiment, the cell may comprise at least the first sector, the second sector and a third sector, the first sector being adjacent to the second and the third sectors. Preferably, the base station may comprise the first, the second and a third antennas, the first antenna covering the first sector and a part of the second and third sectors, the second antenna covering the second sector and a part of the first and third sectors, the third antenna covering the third sector and a part of the first and second sectors. Advantageously, the cell may further comprise at least a first, a second and a third interference regions, the first interference region comprising the part of the second sector covered by the first antenna and the part of the first sector covered by the second antenna, the second interference region comprising the part of the third sector covered by the second antenna and the part of the second sector covered by the third antenna, the third interference region comprising the part of the third sector covered by the first antenna and the part of the first sector covered by the third antenna, the first, second and third antennas simultaneously using the frequency band for communication. In step A, the position of at least a first and a second and a third users may be estimated; and, in step B, if at least the first user is located in the first interference region, the second user is located in the second interference region, and the third user (U3) is located in the third interference region, at least the first, second and third antennas and the corresponding transmitters and receivers can be simultaneously used to carry out a Multi-Input-Multi-Output technique for communication with at least the first, second and third users.

Another object of the invention is to provide a base station in a cell of a wireless communication system, the cell being divided into a plurality of sectors, the base station comprising at least one antenna per sector of the cell, one frequency band is simultaneously used by the antennas of the base station, **characterised in that** it further comprises means for performing the full frequency reuse communication method described above.

Other features and advantages of the invention will appear more clearly from the description of one embodiment of the invention made hereinafter, as an indication and by no means restrictive, with reference to the accompanying drawings, wherein:

- Figures 1 and 2 show service area of a wireless communication system divided into a plurality of cells;
- Figure 3 illustrates a cell comprising overlap and non overlap regions in a particular embodiment using 120° cell sectoring; and
- Figures 4 to 7 illustrate particular embodiments of the invention.

The invention brings a simple solution to full frequency reuse in sectored cells. It may consist in using the base station BS antennas and transceivers of two adjacent sectors to handle the interference in the overlap region of their antenna radiation diagrams. It may apply to both downlink and uplink and may use existing Multiple-Input-Multiple-Output (MIMO) techniques. Some particular embodiments of the invention will be described for uplink (from users to base station) and for downlink (from base station to users). The description focuses on a particular carrier in an OFDMA (Orthogonal Frequency-Division Multiple Access) system, but the concept is general and is readily applicable to any variant of multi-carrier transmission, to single-carrier transmission, and to other multiple access techniques.

In uplink transmission:

It is assumed, for clarity reasons, that users on the uplink do not cooperate and exchange any information (which is the case in most of current cellular systems). Therefore, no space-time-coding can be performed jointly between two users on the uplink.

In one embodiment (figure 4), it is assumed that each user has one antenna only. The cell is divided into two sectors: a first and a second sectors A, B. The base station BS may comprise a plurality of antennas, for example a first and a second antenna, each antenna being connected to a corresponding transmitter and receiver of the base station, the first antenna covering the first sector A and at least a part of the second sector B, the second antenna covering the second sector B and at least a part of the first sector A, the cell further comprising an interference region AB comprising the part of the second sector covered by the first antenna and the part of the first sector covered by the second antenna, and a same frequency band being simultaneously used by both the first and the second antennas for communication. Assuming that the cell contains only one user U, when the user is located in the interference region covered simultaneously by the first and second antennas, the first and second antennas can be simultaneously used to carry out a Multi-Input-Multi-Output technique for communication with at least the user. In the case where the cell contains for example two users, one being located in non-overlap region of sector A, and the other being located in non-overlap regions of sector B, the first and second antenna can serve the users by using the same frequency band.

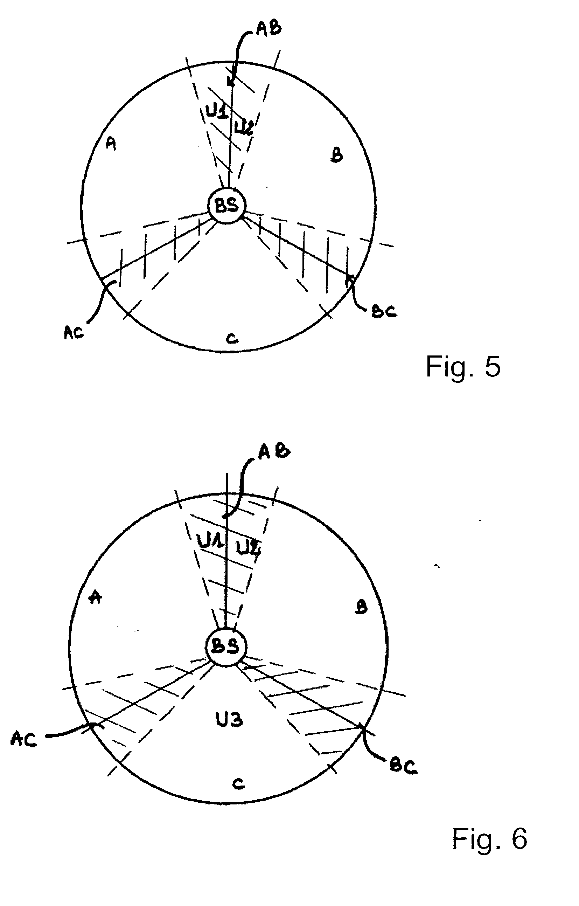

In other embodiments, the cell is assumed to be divided into three sectors: a first sector A, a second sector B and a third sector C, as illustrated in figures 5 to 7. A first antenna may cover the first sector A and a part of the second and third sectors B, C, a second antenna may cover the second sector B and a part of the first and third sectors A, C, the third antenna may cover the third sector C and a part of the first and second sectors A, B. A first interference region AB may comprise the part of the second sector covered by the first antenna and the part of the first sector covered by the second antenna, a second interference region BC may comprise the part of the third sector covered by the second antenna and the part of the second sector covered by the third antenna, a third interference region AC may comprise the part of the third sector covered by the first antenna and the part of the first sector covered by the third antenna, the first, second and third antennas simultaneously using the frequency band for communication.

In the embodiment illustrated in figures 5 and 6, the cell may contain first and second users, referred to as U1 and U2 respectively, which are located for example in the first interference region AB.

In uplink transmission, supposing that user U1 wants to transmit symbol s1 and that user U2 wants to transmit symbol s2 to the base station BS, the two users U1 and U2 transmit their symbols simultaneously to the base station BS. This transmission mode is known as spatial multiplexing.

Denoting by h1 the channel response from user U1 to the first antenna (for example receive antenna of first sector A), by h3 the channel response from the first user U1 to the second antenna (for example receive antenna of second sector B), by h2 the channel response from user U2 to the first antenna, and finally by h4 the channel response from user U2 to the second antenna, the signal samples r1, r2 received by first and second receivers of the first and second sectors A, B, are respectively given by:

$$r_1 = h_1 s_1 + h_2 s_2 + n_1 \qquad\qquad (1.a)$$

$$r_2 = h_3 s_1 + h_4 s_2 + n_2 \qquad\qquad (1.b)$$

where n1 and n2 are additive noise terms.

The receivers of first and second sectors A, B must detect jointly the transmitted symbols s1 and s2, because these symbols cannot be separated in time, in frequency, or in space. In one mode of the invention, the receivers may perform optimum (or maximum likelihood) detection. An optimum receiver computes the following metric for all combinations of (s1, s2) and selects the one which corresponds to the smallest metric.

$$D(s_1, s_2) = \left\{ \left| r_1 - h_1 s_1 - h_2 s_2 \right|^2 + \left| r_2 - h_3 s_1 - h_4 s_2 \right|^2 \right\}. \qquad\qquad (2)$$

An exhaustive search clearly involves the computation of $M^2$ metrics and $M^2$-1 comparisons, where M is the size of the signal constellation used for transmitting symbols s1 and s2. For example, a decoding method as disclosed in European patent application n°06 290 555.9 can be implemented in order to reduce the complexity to M. Commonly suboptimum detection techniques may also be used to detect symbols (s1, s2) in order to further reduce the receiver complexity.

While first and second sectors A, B cooperate (as described above) on the uplink to serve the two users (the first and second users U1, U2) located in their overlap region (the first interference region AB), the third sector C may serve a third user U3 located in the non-overlap region of this sector (figure 6). Indeed, the third sector C does not get any interference from transmissions in the overlap region of first and second sectors A, B, and vice versa, and therefore the third antenna can serve the third user U3. Thus, the base station can simultaneously serve three users even if some of those users are in one interference region of two adjacent sectors of the cell. This means that the proposed solution leads to full frequency reuse in a sectored cell comprising overlap regions between adjacent sectors. Of course, implementation of the proposed technique requires some knowledge on user locations.

Indeed, each sector may need to know if the user is in its non-overlapping region, or in the overlap region with one of its two neighbors. Schedulers of the three sectors may work in cooperation: for example during a given period, either all of the three sectors serve users in their respective non-overlap regions or, two of them cooperate to serve two users in their overlap region and the other sector serves one user in its non-overlap region at the same time.

In another embodiment, multiple antennas case is considered: In a first step, each user is assumed to have a single antenna, and the base station BS is assumed to have two antennas per sector of the cell. For example the first and a fourth antennas may cover the first sector A, the second and a fifth antennas may cover the second sector B, and the third and a sixth antennas may cover at least the third sector (C). In that case, the description above remains valid. The only difference is that we now need to define the channel responses from the considered two users (first and second users) U1 and U2 to both antennas of first sector A, and to both antennas of second sector B. The metric to be minimized by the optimum detector may be in this case:

$$D'(s_1, s_2) = \left\{ |r_1 - h_1 s_1 - h_2 s_2|^2 + |r_2 - h_3 s_1 - h_4 s_2|^2 + |r_3 - h_5 s_1 - h_6 s_2|^2 + |r_4 - h_7 s_1 - h_8 s_2|^2 \right\} \quad (3)$$

In this metric:

- h1 (respectively h5) denotes the channel response from first user U1 to the first (respectively fourth) antenna,
- h3 (respectively h7) denotes the channel response from that first user U1 to the second (respectively fifth) antenna,
- h2 (respectively h6) denotes the channel response from the second user U2 to the first (respectively fourth) antenna, and
- h4 (respectively h8) denotes the channel response from the second user U2 to the second (respectively fifth) antenna,
- r1 (respectively r3) is the signal received by the receiver of the first (respectively fourth) antenna,
- r2 (respectively r4) is the signal received by the receiver of the second (respectively fifth) antenna.

In another embodiment, assuming that the first and the second user U1, U2 have also two transmit antennas. In that case, each user terminal can simultaneously transmit two symbols in a spatial multiplexing mode. With both first and second users (U1 and U2) transmitting in this mode, the result may be the spatial multiplexing of four symbols (s1, s2, s3, s4), two of those symbols may come from the first user U1 and two of them may come from the second user U2. Since each sector of the cell is covered by two receive antennas, the combination of first and second sectors A, B has four antennas, and therefore the base station BS is capable of jointly detecting the four transmitted symbols by using together the four antennas. Receivers for detecting four symbols transmitted in a spatial multiplexing mode can be found in the literature and will not be described here for brevity.

When the users have two (or more) antennas, they can also operate in a space-time coding (STC) mode. For example, the users can employ the well-known Alamouti encoding. In that case, the antennas at the base station BS will receive the superposition of two Alamouti codes. To describe this scheme, suppose that first user U1 has to transmit the following symbols (s1, s3), and that the second user U2 has to transmit the following symbols (s2, s4). With Alamouti encoding employed by both users, the first antenna of first user U1 transmits symbol s1, the second antenna of first user U1 transmits symbol s3, the first antenna of second user U2 transmits symbol s2, and the second antenna of second user U2 transmits symbol s4 during a first symbol interval T1. Next, during a second symbol interval T2, the first antenna of first user U1 transmits symbol -s3*, the second antenna of first user U1 transmits symbol s1*, the first antenna of second user U2 transmits symbol -s4* and the second antenna of second user U2 transmits symbol S2*. The signals received by the two antennas of first sector A during the first and second symbol intervals may be respectively given by:

$$r_1 = h_1 s_1 + h_2 s_3 + h_3 s_2 + h_4 s_4 + n_1 \quad (4.a)$$

$$r_2 = -h_1 s_3^* + h_2 s_1^* - h_3 s_4^* + h_4 s_2^* + n_2 \quad (4.b)$$

Similarly, the signals received by the Rx of sector B during the first and second symbol intervals are respectively given by:

$$r_3 = h_5 s_1 + h_6 s_3 + h_7 s_2 + h_8 s_4 + n_3 \quad (5.a)$$

$$r_4 = -h_5 s_3^* + h_6 s_1^* - h_7 s_4^* + h_8 s_2^* + n_4 \quad (5.b)$$

By subtracting the S2 and S4 terms in these equations, we obtain:

$$x_1 = r_1 - h_3 s_2 - h_4 s_4 = h_1 s_1 + h_2 s_3 + n_1 \qquad (6.a)$$

$$x_2 = r_2 + h_3 s_4^* - h_4 s_2^* = -h_1 s_3^* + h_2 s_1^* + n_2 \qquad (6.b)$$

and

$$x_3 = r_3 - h_7 s_2 - h_8 s_4 = h_5 s_1 + h_6 s_3 + n_3 \qquad (7.a)$$

$$x_4 = r_4 + h_7 s_4^* - h_8 s_2^* = -h_5 s_3^* + h_6 s_1^* + n_4 \qquad (7.b)$$

The person skilled in the art will now recognize that using the Alamouti processing, we can now obtain the optimum estimates of s1 and s3 conditional on s2 and s4. The estimate of s1 may be obtained as follows. Let us compute:

$$\begin{aligned} y_1 &= h_1^* x_1 + h_2 x_2^* + h_5^* x_3 + h_6 x_4^* \\ &= \left( |h_1|^2 + |h_2|^2 + |h_5|^2 + |h_6|^2 \right) s_1 + w_1 \end{aligned} \qquad (8)$$

where w1 represents the combination of noise terms.

By sending this signal y1 to a threshold detector, we get the maximum likelihood estimate of s1 conditional on s2 and s4.

Similarly, let us compute:

$$\begin{aligned} y_2 &= h_2^* x_1 - h_1 x_2^* + h_6^* x_3 - h_5 x_4^* \\ &= \left( |h_1|^2 + |h_2|^2 + |h_5|^2 + |h_6|^2 \right) s_3 + w_2 \end{aligned} \qquad (9)$$

As previously, by sending this signal y2 to a threshold detector, we get the maximum likelihood estimate of s3 conditional on s2 and S4. In other words, these steps provide the optimum estimates of s1 and s3 conditional on s2 and s4.

By repeating these steps for all possible values of the symbols s2 and s4, comparing them and selecting the values corresponding to the smallest metric, we determine the optimum estimates of (s1, s2, s3, s4).

Person skilled in the art will find other ways of detecting these symbols without departing from the framework of this invention.

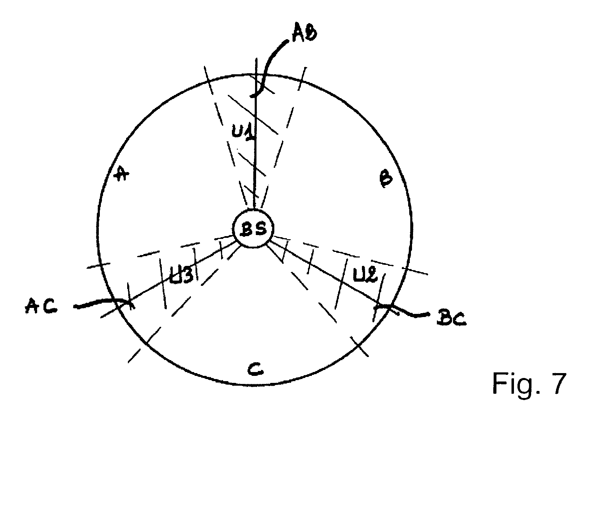

In another variant of the invention, as illustrated in figure 7, the first user U1 is located in the first interference region AB, the second user U2 is located in the second interference region BC, and the third user U3 is located in the third interference region AC. The first second and third users transmit their symbols simultaneously. Suppose that first user U1 transmits symbol s1, second user U2 transmits symbol s2, and third user U3 transmits symbol s3. The receiver of first sector A receives:

$$r_A = h_1 s_1 + h_2 s_3 + n_1$$

Similarly, the receiver of second sector B receives:

$$r_B = h_3 s_1 + h_4 s_2 + n_2$$

And finally, the receiver of sector C receives:

$$r_C = h_5 s_2 + h_6 s_3 + n_3$$

In these equations, the hi (i = 1 to 6) parameters are the appropriate channel responses between users and base station receivers. The receivers of the three sectors cooperate and make a joint detection of the three symbols. The optimum receiver in this case selects the symbol triplet ($s_1, s_2, s_3$) which minimizes the following Euclidean distance:

$$D(s_1, s_2, s_3) = \left\{ \left| r_A - h_1 s_1 - h_2 s_3 \right|^2 + \left| r_B - h_3 s_1 - h_4 s_2 \right|^2 + \left| r_C - h_5 s_2 - h_6 s_3 \right|^2 \right\}$$

Person skilled in the art can use other (suboptimum) receivers to make a tradeoff between performance and complexity.
If each sector has two antennas, the above equation is easily generalized to get spatial diversity.

In Downlink transmission:

Suppose that first and second users U1 and U2 are located in the overlap region of first and second sectors A, B, and that first user U1 is to be served by the first sector A, and second U2 is to be served by second sector B during the same time slot and on the same carrier. Suppose further that during two consecutive OFDM symbol periods, first sector A wants to transmit symbols (s1, s2) to first user U1 and second sector B wants to transmit symbols (s3, s4) to second user U2. Rather than transmitting their symbols independently, the antennas of the two sectors cooperate using for example a full-rate 2x2 space-time code (STC). For example, a code matrix disclosed in the document [2] entitled "full-rate full-diversity 2x2 space-time codes of reduced decoder complexity", Sezginer and Sari, IEEE Commun. Lett., vol. 11, no. 12, pp. 973-975, Dec. 2007, is:

$$\mathbf{X} = \begin{bmatrix} a s_1 + b s_3 & -c s_2^* - d s_4^* \\ a s_2 + b s_4 & c s_1^* + d s_3^* \end{bmatrix} \tag{10}$$

where a, b, c, and d are complex-valued design parameters and the star designates complex conjugate. The first row of this matrix represents the signals transmitted from first sector A, and the second row represents the signals transmitted from second sector B.
Next, the first column of this matrix represents the signals transmitted during the first symbol interval, and the second column represents the signals transmitted during the second symbol interval.
Denoting the channel response (at the subcarrier frequency at hand) from the transmitter antenna of first sector A to the receiver antenna of first user U1 by h1, and the channel response from the transmit antenna of second sector B to the receiver antenna of the second user U2 by h2, the received signal samples corresponding to the symbol periods T1 and T2 can be written as:

$$r_1 = h_1 (a s_1 + b s_3) + h_2 (a s_2 + b s_4) + n_1 \tag{11.a}$$

$$r_2 = -h_1 (c s_2^* + d s_4^*) + h_2 (c s_1^* + d s_3^*) + n_2 \tag{11.b}$$

where n1 and n2 are additive noise terms.

It is assumed that the channel responses h1 and h2 are known to the receiver. It was shown in the document [2] that optimum decoding of the transmitted symbols can be performed with a complexity on the order of $M^2$, where M is the constellation size. Note that first user U1 only needs two symbols, i.e., (s1, s2), from the transmitted four symbols. With one receive antenna in the user, a diversity order of two can be achieved.

Similarly, denoting the channel response from the transmit antenna of first sector A to the receive antenna of second user U2 by h3, and the channel response from the transmit antenna of second sector B to the receive antenna of second user U2 by h4, the received signal samples corresponding to the symbol periods TI and T2 can be written as:

$$r_3 = h_3\left(as_1 + bs_3\right) + h_4\left(as_2 + bs_4\right) + n_3 \qquad (12.a)$$

$$r_4 = -h_3\left(cs_2^* + ds_4^*\right) + h_4\left(cs_1^* + ds_3^*\right) + n_4 \qquad (12.b)$$

The receiver of second user U2 makes the same type of computations as that of first user U1 to detect the symbols (s3, s4). Here a full-rate 2x2 MIMO scheme is used to serve two users in the sectors overlap region, each user detecting two symbols among the four transmitted symbols per code matrix, with second-order diversity.

In the case the user terminal use two antennas for reception, the equations above can be written for each of their antennas, and 4th-order diversity will be achieved instead of 2nd-order diversity in the single receive antenna case. When the user terminals use two antennas for reception, another variant of the invention employs spatial multiplexing on the downlink instead of full-rate space-time coding as described above. First sector A in this variant transmits symbol s1 and second sector B transmits symbol s2 in parallel, and the two antennas of the user are capable of receiving either or both of those symbols.

As on the uplink, Alamouti space-time coding and decoding can be used on the downlink when each sector employs two antennas for transmission, and the users employ two antennas for reception.

Also, as on the uplink, while first and second sectors A, B are serving two users in their overlap region as described above, third sector C can serve a user in its non-overlap region. Indeed, the non-overlap region is free from interference and is not affected by downlink transmissions of first and second sectors A, B. Thus, the proposed technique makes it possible to simultaneously serve three users and to achieve a frequency reuse factor of 1 even with overlapping sectors.

In the embodiment illustrated in figure 7, the first user U1 is located in the first interference region AB, the second user U2 is located in the second interference region BC, and the third user U3 is located in the third interference region AC. By assuming that first sector A transmits symbol s1 to first user U1 located in its overlap region with second sector B, that second sector B transmits symbol s2 to second user U2 located in its overlap region with third sector C, and that third sector C transmits symbol s3 to third user U3 located in its overlap region with first sector A:

First user U1 may receive:

$$r_1 = g_1 s_1 + g_2 s_2 + w_1$$

Similarly, second user U2 may receive:

$$r_2 = g_3 s_2 + g_4 s_3 + w_2$$

And finally, third user U3 may receive:

$$r_3 = g_5 s_3 + g_6 s_1 + w_3$$

Each of these users U1, U2, U3 can detect his symbol as follows. The process will be described for first user U1 only. From the received signal, the first user computes: $x_1 = r_1 - g_2 s_2$, which can be rewritten as $x_1, = g_1 s_1 + w_1$

Next, the first user computes:

$$y_1 = g_1^* x_1 = |g_1|^2 s_1 + g_1^* w_1$$

By sending this signal y1 to a threshold detector, the receiver of first user U1 makes an optimum decision on s1 conditional on the interfering symbol s2. By repeating the above operations for all possible values of s2 and selecting the one which minimizes the Euclidean distance, the receiver can find the optimum estimate of s1.

If the first user has two antennas, the first user can combine the signals from the two antennas before sending them to the threshold detector. This leads to spatial diversity of order two.

Implementation of the proposed scheme may require knowledge of user positions by the scheduler. This does not mean full knowledge, but knowledge of the region in which the user is located (non-overlap regions or overlap region of each sectors of the cell).

Of course the invention is not limited to a particular type of cell sectoring scheme.

**Claims**

1. Full frequency reuse communication method for a base station (BS) in a cell of a wireless communication system, the cell comprising at least a first and a second sectors (A, B), the first and the second sectors (A, B) being adjacent, the base station (BS) comprising at least first and second antennas, each antenna being connected to a corresponding transmitter and receiver of the base station, the first antenna covering the first sector (A) and at least a part of the second sector (B), the second antenna covering the second sector (B) and at least a part of the first sector (A), the cell further comprising at least an interference region (AB) comprising the part of the second sector covered by the first antenna and the part of the first sector covered by the second antenna, a frequency band being simultaneously used by both the first and the second antennas for communication,
**characterized in that** it comprises at least the steps:

   A- estimating at least the position of at least a user (U) in the cell; and
   B- if at least the user is located in the interference region covered simultaneously by the first and second antennas, simultaneously using at least the first and second antennas and the corresponding transmitters and receivers to carry out a Multi-Input-Multi-Output technique for communication with at least the user.

2. Communication method according to claim 1, wherein in step B, a joint detection technique is performed by the corresponding receivers of the first and second antennas for detecting symbols received from the user, and a joint space-time-coding is performed by the corresponding transmitters of the first and second antennas to transmit symbols to the user.

3. Communication method according to claim 1 or 2, wherein:

   - the cell comprises at least the first sector (A), the second sector (B) and a third sector (C), the first sector (A) being adjacent to the second and the third sectors (B, C);
   - the base station (BS) comprises the first, the second and a third antennas, the first antenna covering the first sector (A) and a part of the second and third sectors (B, C), the second antenna covering the second sector (B) and a part of the first and third sectors (A, C), the third antenna covering the third sector (C) and a part of the first and second sectors (A, B); and
   - the cell further comprises at least a first, a second and a third interference regions (AB, BC, AC), the first interference region (AB) comprising the part of the second sector covered by the first antenna and the part of the first sector covered by the second antenna, the second interference region (BC) comprising the part of the third sector covered by the second antenna and the part of the second sector covered by the third antenna, the third interference region (AC) comprising the part of the third sector covered by the first antenna and the part of the first sector covered by the third antenna, the first, second and third antennas simultaneously using the frequency band for communication; and wherein :
   - in step A, the position of at least a first and a second users (U1, U2) is estimated; and
   - in step B, if at least the first and second users are located in the first interference region (AB) covered simultaneously by the first and second antennas, simultaneously using at least the first and second antennas and the corresponding transmitters and receivers to carry out a Multi-Input-Multi-Output technique for communication with at least the first and second users.

4. Communication method according to claim 3,
wherein a third user (U3) is located in the third sector (C) outside of the second and third interference regions (BC, AC); and wherein in step B, the third antenna and the corresponding transmitter and receiver are used for communication with the third user (U3) in the same frequency band.

5. Communication method according to claim 3,
wherein the base station (BS) comprises at least the first, the second, the third, a fourth, a fifth and a sixth antennas, the first and fourth antennas covering at least the first sector (A), the second and fifth antennas covering at least the second sector (B), the third and sixth antennas covering at least the third sector (C),
and wherein, in step B, at least the first, the fourth, the second and the fifth antennas and the corresponding transmitters and receivers are used simultaneously to carry out a Multi-Input-Multi-Output technique for communication with at least the first and second users

6. Communication method according to claim 1 or 2,
wherein:

- the cell comprises at least the first sector (A), the second sector (B) and a third sector (C), the first sector (A) being adjacent to the second and the third sectors (B, C);
- the base station (BS) comprises the first, the second and a third antennas, the first antenna covering the first sector (A) and a part of the second and third sectors (B, C), the second antenna covering the second sector (B) and a part of the first and third sectors (A, C), the third antenna covering the third sector (C) and a part of the first and second sectors (A, B); and
- the cell further comprises at least a first, a second and a third interference regions (AB, BC, AC), the first interference region (AB) comprising the part of the second sector covered by the first antenna and the part of the first sector covered by the second antenna, the second interference region (BC) comprising the part of the third sector covered by the second antenna and the part of the second sector covered by the third antenna, the third interference region (AC) comprising the part of the third sector covered by the first antenna and the part of the first sector covered by the third antenna, the first, second and third antennas simultaneously using the frequency band for communication; and and wherein :
- in step A, the position of at least a first and a second and a third users (U1, U2, U3) is estimated; and
- in step B, if at least the first user (U1) is located in the first interference region (AB), the second user (U2) is located in the second interference region (BC), and the third user (U3) is located in the third interference region (AC), simultaneously using at least the first, second and third antennas and the corresponding transmitters and receivers to carry out a Multi-Input-Multi-Output technique for communication with at least the first, second and third users.

7. Base station (BS) in a cell of a wireless communication system, the cell being divided into a plurality of sectors, the base station comprising at least one antenna per sector of the cell, one frequency band is simultaneously used by all of the antennas of the base station,
**characterised in that** it further comprises means for performing the full frequency reuse communication method according to claims 1 to 6.

Fig. 1

Fig. 2

Fig. 3

Fig. 4

Fig. 5

Fig. 6

Fig. 7

Europäisches
Patentamt

European
Patent Office

Office européen
des brevets

## EUROPEAN SEARCH REPORT

**Application Number**

EP 08 29 0452

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/108885 A (ROTANI INC [US]; LASTINGER ROC [US]; SPENIK JOHN [US]; WOODBURY BRIAN) 27 September 2007 (2007-09-27) * page 1, paragraph 3 * * page 6, paragraph 30 - page 7, paragraph 36 * * page 9, paragraph 39; figures 19,20 * * page 9, paragraph 43 * * page 12, paragraph 52; figures 1,8 * * page 19, paragraph 66; figures 9,17 * ----- | 1-7 | INV. H04B7/04 |
| A | US 2005/003763 A1 (LASTINGER ROC [US] ET AL) 6 January 2005 (2005-01-06) * abstract * ----- | 1-7 | |

| TECHNICAL FIELDS SEARCHED (IPC) |
|---|
| H04B |

The present search report has been drawn up for all claims

| Place of search | Date of completion of the search | Examiner |
|---|---|---|
| The Hague | 9 December 2008 | Yang, Betty |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 29 0452

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2008

| Patent document cited in search report | | Publication date | Patent family member(s) | | Publication date |
|---|---|---|---|---|---|
| WO 2007108885 | A | 27-09-2007 | CA | 2637182 A1 | 27-09-2007 |
| | | | EP | 1994650 A2 | 26-11-2008 |
| US 2005003763 | A1 | 06-01-2005 | US | 2008137616 A1 | 12-06-2008 |
| | | | US | 2008132260 A1 | 05-06-2008 |
| | | | US | 2008132261 A1 | 05-06-2008 |
| | | | US | 2008274748 A1 | 06-11-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 06290555 A

### Non-patent literature cited in the description

- **Sezginer ; Sari.** full-rate full-diversity 2x2 space-time codes of reduced decoder complexity. *IEEE Commun. Lett.,* December 2007, vol. 11 (12), 973-975